# EUROPEAN PATENT APPLICATION

(11) **EP 4 818 907 A2**
(43) Date of publication of application: **07.10.2026**
(21) Application number: 26167678.7
(22) Date of filing: 25.03.2026
(51) Int. Cl.: G06F 11/30, G05B 19/042, G06F 11/20

(54) **PARTITIONING AND REDUNDANCY CONTROL IN PROCESS CONTROL SYSTEMS**

(30) Priority: 02.04.2025 US 202519098363; 07.04.2025 US 202519172297
(71) Applicant: Honeywell International Inc., Charlotte, NC 28202 (US)
(72) Inventor: PULINI, Christopher, Charlotte, 28202 (US); WAYNICK, Mike, Charlotte, 28202 (US); DRAYTON, Gary, Charlotte, 28202 (US); SWANSON, Norman, Charlotte, 28202 (US); BUONACUORE, Christopher, Charlotte, 28202 (US)
(74) Representative: Haseltine Lake Kempner LLP

(57) **Abstract**

Process control systems are configured to confirm the presence of a primary control application by a backup control application via a common I/O subsystem in an automation control platform in order to prevent a "dual primary" condition. An I/O subsystem receives request messages generated by the backup control application and broadcasts them onto the network. Further, the primary control application receives the request messages and provides the response back to the backup control application via I/O subsystem. The rebroadcasting of these messages by the I/O subsystem can be used to prevent the control system that include controllers and/or workloads that are located in different controller platforms from being partitioned from one another due to a fault in a communication network link providing data and status communications between the different controller platforms.

## Description

### TECHNICAL FIELD

This disclosure is generally directed to operation of process control systems. More specifically, to controlling partitioning and redundancy features of a networked process control system.

### BACKGROUND

Industrial process control and automation systems are often used to automate large and complex industrial processes. In deployments of conventional network control systems, the entity which is hosting the control function and responsible for the related control calculations (such as proportional integral differential (PID) control calculations) is typically an embedded computer device/platform, typically described as being a process "controller." Each controller comprises computing hardware generally including at least one processor or other computing device having an associated memory, such as being an embedded controller. What is referred to herein as a "controller platform" comprises one controller or a pair of controllers in the case of redundant controllers, where the controller platform hosts in its memory a control solver application

Each "controller platform" communicates in a level above with at least one server over a plant-wide network, and levels below typically through an I/O network, then I/O devices, then sensors and actuators that control a portion of the processing equipment in the plant. In order to ensure a high level of control system availability, the controllers in a network control system are typically deployed in a scheme which provides hardware redundancy. Specifically two controller platforms deployed to do the job of one, or more specifically, a "primary" controller which is actively executing the control mission and a "backup" controller which is on standby, ready to assume the control mission if there is a failure of the primary controller. Accordingly, traditional high availability control system redundancy uses a primary controller along with a backup controller for each controller platform, which in the simplest non-redundancy control system case consists of a single controller. Upon the failure of a primary controller in a redundant controller pair controller platform, non-redundant operation using the backup controller continues until a repair or replacement is made to the primary controller to restore the controller redundancy in the controller platform. The control solver applications are conventionally deployed in a ratio of 1.1 with the controller platforms. This means each controller platform, whether redundant or not, always hosts only one control solver application.

In the deployments explained above, the backup can take over on failure of a primary controller only when the backup controller it is fully synchronized to the primary controller. If the primary fails when it is not synchronized, or only partially synchronized, then the backup typically does not take over. In certain controller deployments memory retention systems using non-volatile memory or random access memory (RAM) systems are used that are retained by the primary when the control solver application is recovered. However, if the hardware has failed and the module replaced, then user intervention is required to restore the configuration.

In certain controller deployments controller platforms are coupled to one another by a private path redundancy network providing a controller pool, each controller platform having at least one controller including computing hardware and a memory. A control solver application pool includes a plurality of control solver applications s, wherein the controller platforms are coupled by an input/output mesh network to input/output devices coupled to field devices, such as the EXPERION^{®} highly integrated virtual environment (HIVE) control system technology, marketed by Honeywell International Inc. Within a HIVE controller deployment loss of an unsynchronized or non-redundant primary control application requires user intervention to restore an control solver application configuration and state.

### SUMMARY

As used herein an industrial process facility includes field devices and processing equipment that runs an industrial process involving a tangible material that disclosed embodiments apply. For example, oil and gas, chemical, beverage, pharmaceutical, pulp and paper manufacturing, petroleum processes, electrical, and water. An industrial process facility is distinct from a data processing system that only performs data manipulations. Embodiments as described in this disclosure include systems, apparatus, methods, and techniques for providing redundancy and partitioning control in a process control system.

A non-limiting example embodiment includes a method for executing process control operations in a process control system, the method comprising: receiving, at an input/output member node of the process control system, data indicative of a set of operational states for a first group of control member nodes, rebroadcasting, from the input/output control member node and over a communication link coupling the input/output member node to a second group of control member nodes, the data indicative of the set of operational states for the first group of control nodes; receiving, at the second group of control member nodes, the data indicative of the set of operational states for the first group of control member nodes; and determining, at the second group of control member nodes, an operational status of each of the first group of control member nodes based on the received data indicative of the operation states for each of the first group of control member nodes.

Alternatively or additionally, example embodiments of the method comprise wherein the second group of control member nodes is partitioned from the first group of control member nodes so that any broadcasts made by the first group of control member nodes are not directly communicated to the second group of control member nodes.

Alternatively or additionally, example embodiments of the method comprise wherein at least one of the second group of control member nodes is operating as a backup processing node for at least one workload being processed by one or more controllers included in the first group of control member nodes.

Alternatively or additionally, example embodiments of the method comprise wherein rebroadcasting the data indicative of the set of operational states for the first group of control nodes includes providing the rebroadcasting in a time period that is less than the timeout threshold period of time allowed before a nonresponsive control member node is considered to be inactive.

Alternatively or additionally, example embodiments of the method comprise wherein the first group of control member nodes is coupled to a first set of one or more network switches, and the second group of control member nodes is coupled to a second set of one or more network switches that are different and separate from the one or more network switches of the first group of switches.

Alternatively or additionally, example embodiments of the method comprise wherein the first set of one or more switches is communicatively coupled to the input/output member node thru a first commination link, and the second set of one or more network switches is communicatively coupled to the input/output member node through a second communication link that is different and separate from the first communication link.

Alternatively or additionally, example embodiments of the method further comprise: interfacing with a plurality of sensors and controlling the operation of a plurality of actuators using the input/output control member node while the plurality of sensors and the plurality of actuators are controlling the operation of one or more pieces of processing equipment included in the process control system.

A non-limiting example embodiment includes a method for executing process control operations in a process control system, the method comprising: receiving, at an input/output member node of the process control system, a first address request message issued by a first control member node of the process control system, wherein the first address request message is directed to a second control member node of the process control system and includes a request for information regarding an operational status of the second control member node; in response to receiving the first address request message, rebroadcasting, from the input/output member node, the first address request message as a first indirect address request message to the second control member node; receiving, at the input/output member node, a reply back from the second control member node in response to the first indirect address request message; and in response to receiving the reply back from the second control member node, outputting, from the input/output member node, an indirect address response directed to the first control member node, the indirect address response including an indication of the operational status of the second control member node.

Alternatively or additionally, example embodiments of the method comprise wherein the second control member node is operating as a secondary and backup control processor for the first control member node.

Alternatively or additionally, example embodiments of the method comprise wherein the reply back from the second control member node includes an indication that the operational status of the second control member node indicates that the second control member node is online and functioning properly.

Alternatively or additionally, example embodiments of the method comprise wherein the reply back from the second control member node includes an indication that an operational status of the second control member node is offline or failed, and wherein the indirect address response directed to the first control member node includes an indication that the second control member node is offline or failed.

Alternatively or additionally, example embodiments of the method further including: in response to receiving, at the first control member node, the indication that the second control member node is offline or has failed, performing a switchover including the first control member node assuming the role of a primary controller and beginning execution of a workload prevoiusly being processed by the second control member node when the second control member node was operating as the an original primary controller.

Alternatively or additionally, example embodiments of the method further comprise: initiating a response timer having a response timer threshold value at a same time as the rebroadcasting the first indirect address request message to the second control member node, wherein the response timer threshold value represents a time limit set by input/output member node for receiving a response back from the second control member node.

Alternatively or additionally, example embodiments of the method further comprise: using the input/output control member node, interfacing with a plurality of sensors and controlling the operation of a plurality of actuators using the input/output control member node while the plurality of sensors and the plurality of actuators are controlling the operation of one or more pieces of processing equipment included in the process control system.

A non-limiting example embodiments includes a process control system comprising: a plurality of process controllers communicatively coupled together through an input/output control member, the input/output control member comprising one or more input/output controllers configured to control operations associated with input sensors and output actuators included as part of the process control system; the input/output control member configured to receive messages broadcast from the plurality of process controller, each of the messages including data indicative of an operational state of a particular one of the plurality of process controller that issued the message, and to rebroadcast the received messages over one or more communication links configured to communicatively couple the input/output control member with the plurality of process controllers.

Alternatively or additionally, example embodiments of the process control system comprise: wherein at least one of the messages configured to be broadcast from the plurality of process controllers and received at the input/output control member includes an address request message configured to be issued by a first one of the plurality of process controllers and directed to a second one of the plurality of process controllers, wherein the second one of the plurality of process controllers is configured as a secondary and backup process controller for the first one of the plurality of process controllers.

Alternatively or additionally, example embodiments of the process control system comprise wherein in response to receiving the at least one message including the address request message, the input/output control member is further configured to: communicate the address request message directly to the second one of the plurality of process controllers using an indirect address request; receive an address response back from the second one of the plurality of process controllers in reply to indirect address request; and upon receipt of the address response back from the second one of the plurality of process controllers, communicate an indirect address response to the first one of the plurality of process controller indicative of information provided in the address response received from the second one of the plurality of process controllers.

Alternatively or additionally, example embodiments of the process control system comprise wherein the address response sent back from the second one of the plurality of process controllers includes information indicative of the operational state of the second one of the plurality of process controllers.

Alternatively or additionally, example embodiments of the process control system comprise wherein a first group of control member nodes of the plurality of controllers is coupled to a first set of one or more network switches, and a second group of control member nodes of the plurality of controllers is coupled to a second set of one or more network switches that are different and separate from the one or more network switches of the first group of switches, and wherein the first set of one or more switches is communicatively coupled to the input/output control member through a first commination link, and the second group of one or more network switches is communicatively coupled to the input/output control member through a second communication link that is different and separate from the first communication link.

Alternatively or additionally, example embodiments of the process control system comprise the input/output member further configured to: interfacing with a plurality of sensors and controlling the operation of a plurality of actuators using the input/output control member node while the plurality of sensors and the plurality of actuators are controlling the operation of one or more pieces of processing equipment included in the process control system.

### BRIEF DESCRIPTION OF THE DRAWINGS

For a more complete understanding of this disclosure, reference is now made to the following description, taken in conjunction with the accompanying drawings. The figures, discussed below, and the various embodiments used to describe the principles of the present invention in this patent document are by way of illustration only, and should not be construed in any way to limit the scope of the invention. Those skilled in the art will understand that the principles of the invention may be implemented in any type of suitably arranged device or system.
FIG. 1 is a schematic block diagram of at least some portion of a process control system for an industrial process facility, in accordance with various embodiments.
FIG. 2A illustrates a schematic block diagram of a portion of a process control system, in accordance with various embodiments.
FIG. 2B illustrates a schematic block diagram of a modified version of the portion of a process control system illustrated in FIG. 2A, in accordance with various embodiments.
FIG. 2C illustrates a schematic block diagram of a further modified version of the portion of a process control system illustrated in FIG. 2B, in accordance with various embodiments.
FIG. 3A illustrates a diagram of communications between Control Solver Workloads, in accordance with various embodiments.
FIG. 3B illustrates a diagram of a modified configuration of the workload processing as described above with respect to FIG. 3A, in accordance with various embodiments.
FIG. 4A illustrates a flow chart of a method for controlling operations of a process control system, in accordance with various embodiments.
FIG. 4B illustrates a flow chart of a method for controlling operations of a process control system, in accordance with various embodiments.
FIG. 5 illustrates a block diagram depicting an example computer system, in accordance with various embodiments.

### DETAILED DESCRIPTION

Modern process control systems, such as process control systems used for industrial plants, include hundreds and even thousands of individual embedded controllers that are networked together to form a control network or control platforms for providing control over the devices included in the process control system. Theses process control systems, having large numbers of embedded controllers, will have thousands of tasks and algorithms to run in order to provide proper control and operation of the devices included in the system. Tasks to be performed by the system include but are not limited to interface with Input/Output (I/O) sensors, data acquisition and calculations, and providing control over actuators included as part of field devices in the system. Control units, also referred to as " Control Solver Workloads," or simply "workloads," are provided within the system to execute the tasks and algorithms used to operate the system, and to gather data related to the operation of the system, such as quality control and production information. Each workload is configured with a set of parameters for operating in the embedded system, including parameters related to which controller(s) the workload is to be executed by, and for example a frequency of execution of the workload, for example when tasks requiring the use of the workload need to be performed on a continuous basis, or for example on an iterative but intermittent basis. In addition, the configuration and operation of redundancy backups for the controller and for the workloads is also an important part of the configuration and operation of a process control system.

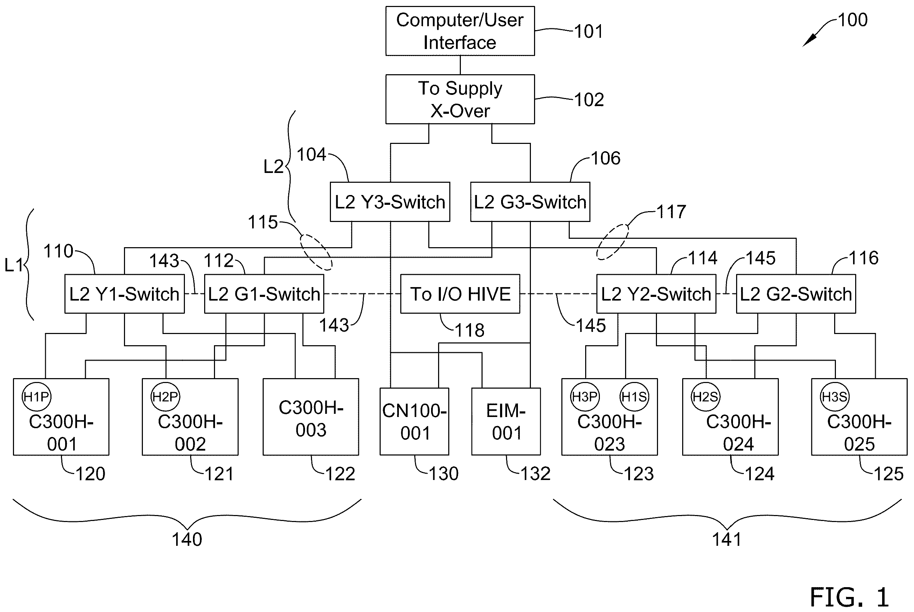

FIG. 1 is a schematic block diagram of a process control system (system) 100 for an industrial process facility (IPF), in accordance with various embodiments. Embodiments of system 100 may represent at least some portion of a larger process control system, which may include many more controllers, switches, and layers of networks compared to the numbers of these devices as illustratively shown for system 100 in FIG. 1. However, it would be understood that embodiments of the apparatus, systems, methods, and techniques further described below with respect to system 100 can be implemented and applied to much larger and more complex process control systems, and therefore the description of the devices and operation of system 100 as described below are to be viewed in a non-limiting manner. Although system 100 is described below as a network communicatively coupled through a plurality of switches, embodiments as disclosed herein may be implemented in networks that employ one or more or only virtual switches or other network topologies where physical switches are not present.

As shown in FIG. 1, system 100 includes a supervisory controller 102 and a plurality of operational controllers 120, 121, 122, 123, 124, and 125, which are networked together with the supervisory controller 102 through a plurality of switches 110, 112, 114, and 116 at Level 1, generally indicated by bracket "L1," and through switches 104 and 106 at Level 2, generally indicated by bracket "L2." A pair of input/output (I/O) controllers 130 and 132 are also networked together with the supervisory controller 102 through the I/O HIVE 118, which is coupled through switches 104 and 106 to the supervisory controller 102.

More specifically, each of the operational controllers 120, 121 and 122 are coupled, separately and individually, to each one of the Level 1 switches 110 and 112. Each of the Level 1 switches 110 and 112 are coupled, separately and individually, to each one of switches 104 and 106, wherein each of the Level 2 switches 104 and 106 are coupled, separately and individually, to the supervisory controller 102. As such, each of the operational controllers 120, 121, and 122 have two completely separate routings to connect these controllers with the supervisory controller 102. Using controller 120 as an example, a first routing for controller 120 extends from the controller through switch 110 to switch 104, and then to supervisory controller 102. A second routing for controller 120 extends from the controller through switch 112 to switch 106, and then to supervisory controller 102. Corresponding parallel routings are provided in system 100 for operational controllers 121 and 122.

In a similarly configured arrangement, each of the operational controllers 123, 124 and 125 are coupled, separately and individually, to each one of the Level 1 switches 114 and 116. Each of these Level 1 switches 114 and 116 are coupled, separately and individually, to each one of the Level 2 switches 104 and 106, wherein as described above, each of the Level 2 switches 104 and 106 are coupled, separately and individually, to the supervisory controller 102. As such, each of the operational controllers 123, 124, and 125 have two completely separate routings to connect these controllers with the supervisory controller 102. Using controller 125 as an example, a first routing for controller 125 extends from the controller through switch 114 to switch 104, and then to supervisory controller 102. A second routing for controller 125 extends from the controller through switch 116 to switch 106, and then to supervisory controller 102. Corresponding parallel routings are provided in system 100 for operational controllers 123 and 125.

In addition, system 100 incudes I/O controllers 130 and 132 coupled, separately and individually, to each of the Level 2 switches 104 and 106, along with being coupled to one another and to the I/O HIVE 118. The couplings from controllers 130 and 132 to the I/O HIVE 118 allow controllers 130 and 132 to provide computing processor resources for the operation of the input and output devices included in the I/O HIVE. In various embodiments, controller 130 and controller 132 act a redundant controllers for one another, wherein in the event of a failure of one of controllers 130 or 132, the non-failed controller of the pair can continue to provide the required computing processor resources for the operation of the I/O devices included in the I/O HIVE 118.

The Control HIVE 118 maintains its operational state through a distributed data store. The operational state includes data indicative of which Control HIVE hosts are active and which Control Solver Workloads those hosts are meant to deploy. Control HIVE members periodically broadcast their view of its operational state to all other members. If any member fails to broadcast its view of its operational state within a timeout threshold, that member will be considered offline by other Control HIVE members, and any workloads assigned to the non-responsive Control HIVE member will be re-assigned and deployed on another member (if any are available).

The data indicative of the Control HIVE operational state is distributed over the same redundant physical (FTE) network as the Control Solver Workloads used to read and write values to and from field I/O via the I/O HIVE, for example comprising controller 130 (CN100-001) and controller 132, (EIM-001). It is possible for the Control HIVE members to become physically segregated from one another but for Control Solver Workloads to continue to have connectivity to their field I/O. This creates a condition where the Control HIVE 118 can "split" into two separate, independent groups of Control HIVE members, each Control HIVE believing they are responsible for deploying the same set of Control Solver Workloads. The results include a "dual primary" or "duplicate primary" condition, where two separate Control Solver Workloads assume the same presence (IP Address) on the redundant network. This "dual primary" condition will disrupt communications between the original Control Solver Workload and its field I/O (CN100 or EIM), resulting in a loss of control of the field I/O.

Embodiments of the systems, apparatus, methods, and techniques as described in this disclosure are arranged to prevent the Control HIVE from becoming split by "bouncing" operational state messages off of the I/O HIVE nodes (e.g., controller 130 - CN100, and controller 132 - EIM-001 in FIG. 1), to reach otherwise unreachable Control HIVE members, ensuring that Control HIVE members that are unable to broadcast their operational database view to other Control HIVE members are not considered to be offline if in fact the non-responsive Control HIVE member is in fact online and operating properly.

In some currently employed arrangements of process controllers in process control systems, the Control HIVE members must be connected to the same two network FTE switches. This means it is virtually impossible for Control HIVE members to lose network connectivity to one another yet maintain connectivity to field I/O. However, this arrangement of controllers is an obviously limiting constraint. As process control systems become larger and more complex, process control planners would like to have the capability to distribute their Control HIVE members geographically throughout a facility, while still providing increased robustness and reliability of the control process.

By way of a non-limiting example, as shown in FIG.1 system 100 includes a first set of controllers 120, 121, and 122, which are configured as a first controller platform, as generally indicated by bracket 140, and a second set of controllers 123, 124, and 125, which are configured as a second controller platform, as generally indicated by bracket 141. The controllers 120, 121, and 122 in the first controller platform are communicatively coupled to one another through switches 110 and 112 at Level 1 of the network, while the controllers 123, 124, and 125 in the second controller platform are communicatively coupled to one another through switches 114 and 116, again at Level 1. The controllers in the first controller platform are communicatively coupled to the controllers in the second controller platform through the switches 104, 106 at Level 2, and then through the supervisory controller 102. The controllers in the first controller platform are coupled to the Level 2 switches through the network connection 115, while the controllers in the second controller platform are coupled to the Level 2 switches through network connection 117, as illustratively represented, respectively, buy dashed ellipses 115 and 117.

The controller platforms 140, 141 are each shown coupled by an I/O HIVE 118 and controllers 130, 132 configured for controlling a portion of the processing equipment the process control system 100 that comprise sensors and actuators. Sensors are not limited to any particular type or types of sensors, and may comprise type of senor configured to provide an output, such as but not limited to an electrical output signal, that is indicative of a sensed value for a physical parameter, such as but not limited to pressure, temperature, rates of motion such as revolutions per minute (RPM), etc. Sensors may include devices such as mechanical switches and/or photocells configured to provide an output, such as an electric signal, indicative of a state of the device, such as an ON or OFF state. An actuator may be any component or device that produces force, torque, or displacement, when an electrical, pneumatic or hydraulic input is supplied to the actuator. Actuators are not limited to any particular type of actuators, and my include rotary actuators such as motors and pumps, or linear actuators such as solenoids and control valves. Actuators may include pneumatic or hydraulic actuators, such as control values, and/or electrical, magnetic, thermal, mechanical and piezoelectric actuators. The communications networks that may be includes in system 100 are not limited to any particular type of network or network connections, and may include but are not limited to Local Area Networks (LAN), Wireless LAN, Wide Area Networks (WAN), which may use one or more type of network connections including but not limited to Ethernet networks, utilizing various types of transmission cables, including but not limited to Ethernet cables and fiber optic cabling.

While this arrangement of controller platforms and multi-level network switches allows for a desirable level of flexibility regarding the geographical arrangement of the controllers in various physical locations within a plant or a facility, using system 100 as an illustrative example, if for some reason the communicative coupling provided by either network connection 115 or network connection 117 is lost, the first controller platform and the second controller platform may become partitioned from one another. This can disrupt the ability of the system to properly control for example the I/O HIVE118 and/or other processes related for example to maintaining the required redundancy among the controllers.

For example, various ones of the controllers included in a particular controller platform may be configured as a secondary or redundant backup controller(s) for one or more of the controllers in a different controller platform. If these controller platforms become partitioned from one another, the proper exchange of backup data, and receipt and confirmations of the operational status of each of these controllers may no longer be occurring, which can result in loss of the proper control over the processes being performed by these controllers. Again by way of non-limiting example, as shown for system 100 in FIG. 1, controller 123 is configured to operate a primary controller H3P 154, wherein controller 125 is configured to operate as the secondary controller H3S 155 for controller 123. As such, both controller 123, acting as the primary controller H3P 154, and controller 125 acting as the secondary controller H3S 155, are communicatively coupled in the same controller platform 141. As such, a loss of the communications provide by network connection 117 would not prevent the continued required level of communication between controllers 123 and 125, at least with respect to redundancy, through switches 114 and 116 at Level 1.

However, other controller pairs, including a primary controller and the associated secondary controller acting as the backup controller for the primary controller, may not be configure in the same controller platforms. Again referring the system 100 and FIG. 1 as a non-limiting example, in system 100 controller 120 is coupled at Level 1 to the first controller platform 140 to operate as the primary controller H1P 150, wherein controller 123, which is coupled at Level 1 to the second controller platform 141, provides the redundancy for controller 120 as secondary controller H1S 151. In a similar manner, in system 100 controller 121 is coupled at Level 1 to the first controller platform 140 to operate as the primary controller H2P 152, while controller 124, which is coupled at Level 1 to the second controller platform 141, provides the redundancy as backup for controller 121 as secondary controller H2S 153. Because the secondary controllers 151, 153 for both of primary controllers 150 and 152 are separated into different controller platforms, a loss of either of the network connections 115 or 117 would partition the control platforms, and potentially result in loss of control of the I/O HIVE 118 and/or other control functions being provided by at least controllers 120 and 121 due to mis-communications related to which controllers are still operational as the primary controllers, along with potential loss of proper backup and redundancy features.

In order to address these potential problems, embodiments of the systems, apparatus, methods, and techniques as described in this disclosure maintain the communication of the operational states between controllers coupled in different and separated controller platforms utilizing separate communicative couplings between the controller platforms and the I/O HIVE 1118. For example, as shown in FIG. 1 system 100 includes a communication link 143 configured to communicatively couple the controllers 120, 121, and 122, either directly or through switches 110 and 112, to the I/O HIVE 118 and to controllers 130 and 132. Communication link 143 does not include or require the use of network connection 115. As further shown in FIG. 1, system 100 includes a communication link 145 configured to communicatively couple the controllers 123, 124, and 125, either directly or through switches 114 and 116, to the I/O HIVE 118 and to controllers 130 and 132. Communication link 145 does not include or require the use of network connection 117.

Because of the direct connections between the controllers and I/O HIVE 118, communications between the controllers and the I/O HIVE members, along with communications between controllers in different ones of controller platforms 140, 141, are maintained despite a failure of the ability to provide communications between the controller platforms through network connections 115 and/or 117. The communications may include communication of the status of a non-responsive I/O HIVE member, wherein the status indicates that the non-response I/O HIVE member is online and functioning properly.

By utilizing the I/O HIVE 118 to monitor the messages being communicated between control HIVE members, and to periodically "repeat" these messages in the form of their own broadcast message, a failure of network connection 115 and/or network connection 117 does not lead to improper implementation of a secondary controller, resulting in a "dual primary" controller situation, and prevents improper activation of a secondary or backup controller to attempt to perform a workload that is still being properly performed by the currently assigned primary controller.

In these embodiments, the a time period for issuing these "repeat" messages by the I/O HIVE 118 will be less than the timeout threshold period of time allowed before a nonresponsive Control HIVE member is considered to be inactive. In the event of a partitioning of the control system, for example due to a loss of communicative coupled between two or more of the control platforms, the rebroadcasting of the messages using the I/O HIVE 118, for example by controllers 130 and/or 132, will allow otherwise unreachable Control HIVE members to see that Control HIVE members on the other side of a "split" or partition are in fact still alive, and therefore should not be considered inactive or offline. As such no action will be taken, for example by the secondary controller on the other side of the partition corresponding to that primary controller, to re-assign Control Solver Workloads currently being properly process by the primary controller, and as such no loss of control or "dual primary" condition will occur.

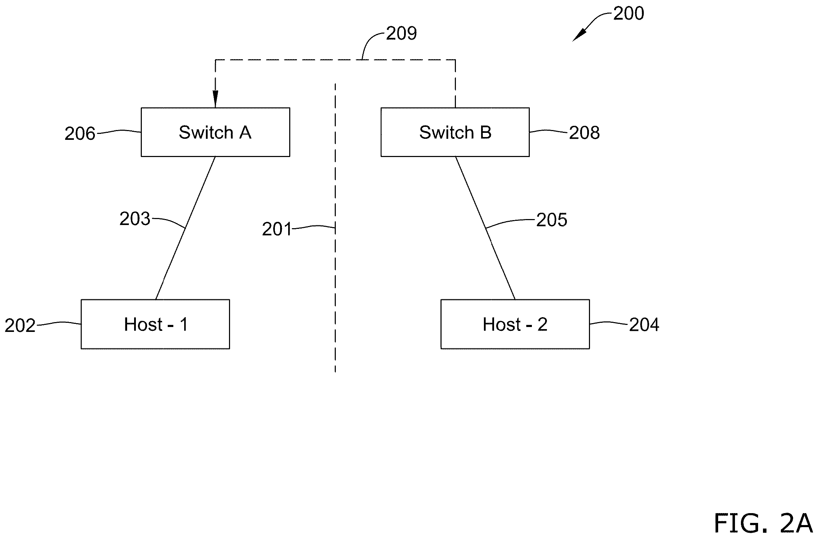

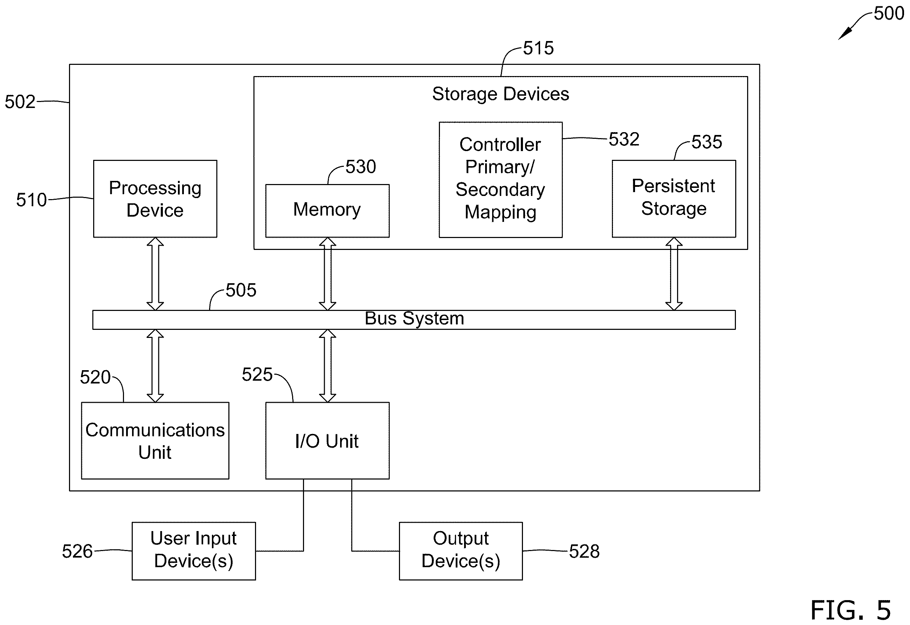

Embodiments of supervisory controller 102 may include or be coupled to computer/user interface 101. In various embodiments, computer/user interface 101 may include some combination of processing circuitry, computer memory, and may be configured to process computer instructions and execute application software as required to perform any of the functions and to provide any of the features required to be performed and provided at the supervisory controller level for system 100. In some embodiments, computer/user interface 101 includes any of the devices described below with respect to computer system 502 and FIG. 5. FIGS. 2A-2C as further described below illustrate simplified block diagrams illustrative of the principles described above with respect to the operation of system 100.

FIG. 2A illustrates a schematic block diagram 200 of a portion of a process control system, in accordance with various embodiments. In various embodiments, the portion of the process control system represented in diagram 200 may be a configuration of one or more portions of system 100 (FIG. 1). As shown in FIG. 2A, a first controller HOST-1 202 is coupled to switch A 206 through a communicative coupling 203, and a second controller HOST-2 204 is coupled to switch B 208 through a communicative coupling 205.

Controllers 202 and 204 may be configured in separate controller platforms, as represented by dashed line 201, and may be communicatively coupled through a network link 209, which may comprise networks, network switches, and controllers (not specifically shown in FIG. 2A) at a higher level than the network level were switch 206 and switch 208 are provided. Because controller 202 and 204 are only communicatively coupled to one another through network link 209, if for some reason the communication link provided by network link 209 fails, the ability to broadcast, receive, and respond to operational state messages between controller 202 and 204 will be lost. The result will be a partition created between controller 202 and 204, which as described above, may result in the loss of proper control of the system where controllers 202 and 204 are operating. In addition, one of more of controllers 202, 204 may be configured as the secondary and backup controller for the other controller, wherein the loss of the communications through network link 209 may result in the loss of a required level of redundancy for the process control system where controllers 202 and 204 are operating, including a "duel primary" condition wherein both controllers are trying to operate as a primary controller for the same workloads using the same IP address.

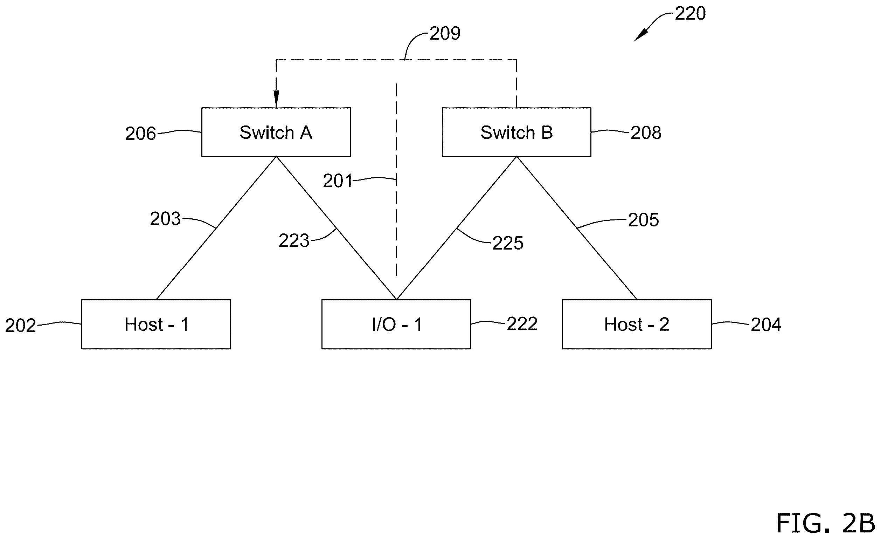

FIG. 2B illustrates a schematic block diagram 220 of a modified version of the portion of a process control system illustrated in FIG. 2A, in accordance with various embodiments. As shown in FIG. 2B, block diagram 220 includes controller 202 coupled through communicative coupling 203 to switch A 206, and controller 204 coupled through communicative coupling 205 to switch B 208, wherein controller 202 may be configured in a controller platform that is different from the controller platform where controller 204 is configured, as represented by dashed line 201, and wherein switch A 206 is communicatively coupled to switch B 208 by network link 209, which comprises networks, network switches, and controllers (not specifically shown in FIG. 2B) at a higher level than the network level were switch A 206 and switch B 208 are provided.

In addition to the above described configuration in block diagram 220, I/O-1 222 is also included in the configuration. I/O-1 222 may include the I/O HIVE 118 (FIG. 1), including one or more controllers, and may be configured to interface with any input and any output devices (not specifically shown in FIG. 2B), which may be coupled with a control system that includes controllers 202, 204 and switch A 206, and switch B 208. As shown in block diagram 220, the controller(s) of I/O-1 222 is/are communicatively linked to switch A 206 through communication link 223, and thereby to controller 202, through a communication path that does not include or rely on network link 209. In addition, the controller(s) of I/O-1 module 222 is/are communicatively linked to switch B 208 through communication link 225, and thereby to controller 204, through a communication path that again does not include or rely on network link 209. These separate communication links provided by communication links 223 and 225 allow I/O-1 222 to monitor the messages being broadcast by both controller 202 and controller 204, including broadcast and confirmation messages issued and received by both controllers 202 and 204 regarding the operational statues of the controllers.

In addition, I/O-1 222 can be configured to rebroadcast these messages at some periodic time interval that is less than a timeout period set for each of controllers 202 and 204 for receiving a proper operational status message from the corresponding controller. The rebroadcast of the message(s) could be sent to both controller 202 and controller 204, despite the loss of communications of these messages between the controllers using network link 209. As such, the rebroadcasting of these messages by the I/O-1 222 would prevent the control system that included controllers 202 and 204 from being partitioned from one another due to a fault in the network link 209, and thus prevent improper take-overs of one controller's operations based on a false determination that that the primary controller has failed, but instead is only due the lack of operational state messages being communicated across the now failed network link 209.

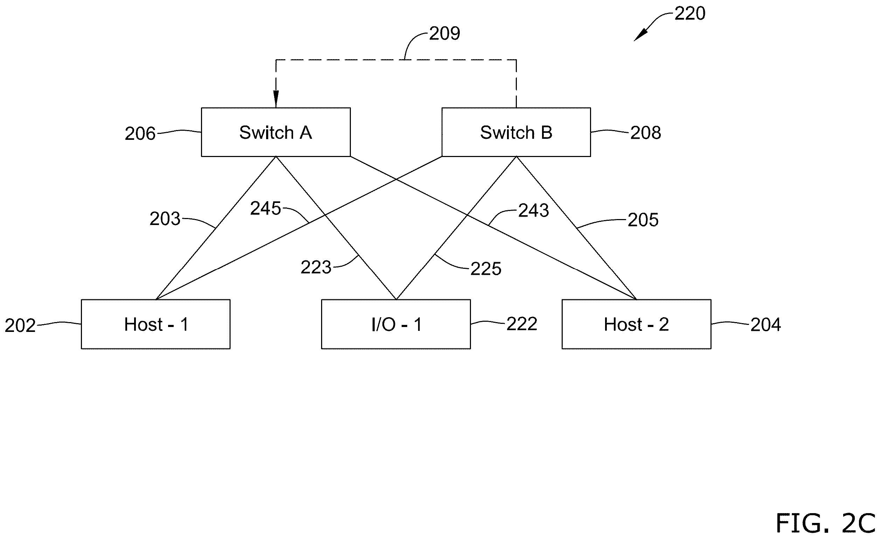

FIG. 2C illustrates a schematic block diagram 240 of a further modified version of the portion of a process control system illustrated in FIG. 2B, in accordance with various embodiments. As shown in FIG. 2C, block diagram 240 includes controller 202 coupled through communicative coupling 203 to switch A 206, and controller 204 coupled through communicative coupling 205 to switch B 208, wherein controller 202 may be configured in a controller platform that is different from the controller platform where controller 204 is configured, as represented by dashed line 201, and wherein switch A 206 is communicatively coupled to switch B 208 by network link 209, which comprises networks, network switches, and controllers (not specifically shown in FIG. 2B) at a higher level than the network level were switch A 206 and switch B 208 are provided. I/O-1 222 is also included in diagram 240, and coupled to switch A 206 through communication link 223, and to switch B 208 through communication link 225, as described above with respect to diagram 220 and FIG. 2B.

Diagram 240 differs from diagram 200 in that the configuration in diagram 240 includes a communicative link 245 directly coupling controller 202 with switch B 208, and a communication link 243 directly coupling controller 204 with switch A 206. The addition of communication links 243 and 245 provide addition robustness to the configuration in that even in the event of a failure of one of the communication links 223 or 225 between switch A 206 or switch B 208, respectively, and I/O-1 222, the additional communication links 243, 245 still allow both of the controllers 202 and 204 to communicate with the I/O-1 222 thorough at least one of the switches 206, 208.

Embodiments of the systems, apparatus, methods, and techniques as described in this disclosure maintain a maximum level reliability for the precise customer requirement of distributing Control HIVE members deployed in controller platforms configured on two or more FTE network switches. Using the same broadcast mechanism employed today by Control HIVE member nodes to share their view of operational state, I/O HIVE nodes (CN100, EIM) will passively listen on the network for Control HIVE member messages and periodically 'repeat' these messages in the form of their own broadcast message. The period will be less than the timeout threshold for an inactive Control HIVE member. This will allow otherwise unreachable Control HIVE members to see that Control HIVE members on the other side of a "split" are in fact still alive and they should not be considered inactive or offline -- and that no action will be taken to re-assign Control Solver Workloads and no loss of control will occur.

Embodiments as disclosed herein include a method to confirm the presence of nodes (control applications) in a split automation control platform via a common the I/O subsystem. The I/O subsystem receives the operation states of nodes of first group and periodically broadcasts these operation states onto the network wherein, the period is less than the timeout threshold for a node to be considered as inactive. Further, a second group of nodes receives the operational states to determine the presence or absence of nodes in first group.

Referring back to FIG. 1 and system 100, a set of Control Solver Workloads in a Control HIVE are responsible for reading and writing field I/O values to and from I/O HIVE nodes, e.g., controller 120 (CN100-001), and controller 132, (EIM-001). Control Solver Workloads are maintained in a redundant manner in that the control state is replicated from a primary controller to a backup secondary controller. The backup Control Solver Workload periodically issues an Address Resolution Protocol (ARP) request message to confirm the presence of the primary Control Solver Workload.

After issuing the ARP request message, when the backup Control Solver Workload does not receive any response from the primary Control Solver Workload within a predetermined timeout threshold period, the backup Control Solver Workload will assume there has been a failure of some kind with respect to the primary Control Solver Workload, and therefore will assume the role as the primary Control Solver Workload. In various embodiments, the primary Control Solver Workload is tied to a particular IP address, while the and backup Control Solver Workload is tied to a particular IP address different from the IP address of the primary Control Solver Workload, meaning that there is an IP address associated with the primary role, and another and different IP address associated with the backup role. When a Control Solver Workload assumes a role, it also assumes the IP address associated with that role.

The Control Solver Workload control state is replicated from primary to backup over the same redundant physical (FTE) network as the Control Solver Workloads use to read and write values to and from field I/O via the I/O HIVE (CN100, EIM). It is possible for the Control Solver Workloads to become physically segregated from one another but continue to have connectivity to their field I/O. This creates a condition where the backup Control Solver Workload will assume the primary role even though its partner, the still functioning and corresponding primary Control Solver Workload, is actively controlling field I/O as a primary controller. This results in a "dual-primary" condition where two separate Control Solver Workloads assume the same presence (IP Address) on the redundant network. This will disrupt communication between the original Control Solver Workload and its field I/O (CN100 or EIM), resulting in a loss of control.

Embodiments of the apparatus, systems, methods and techniques as disclosed herein are configured to prevent two Control Solver Workload partners from assuming the same redundancy role by "bouncing" ARP requests off of the I/O HIVE nodes (CN100, EIM) to the partner, ensuring that backup Control Solver Workloads that are unable see messages from the primary Control Solver Workload will not automatically assume the primary role and thereby create a loss of control within the process control system.

In various embodiments of existing systems, Control HIVE members must be connected to the same two FTE switches. This means it is virtually impossible for Control Solver Workload partners to lose network connectivity to one another yet maintain connectivity to common field I/O. However this is an obviously limiting constraint as Control HIVE customers would like to distribute their Control Solver Workload partners geographically throughout a facility, providing increased robustness and reliability of the control process. Embodiments of the apparatus, systems, methods, and techniques as disclosed herein provide maximum reliability for the precise customer requirement of distributing Control HIVE members to two or more FTE network switches. Using a mechanism similar to the ARP (Address Resolution Protocol) request employed today by Control Solver Workload partners to ensure their partner is active, Control Solver Workloads will effectively proxy their ARP requests for their partners through common I/O HIVE nodes (CN100, EIM).

Special user-space applications may be written to construct the requests and broadcast them onto the network, on which the I/O HIVE nodes will be listening. If an I/O HIVE node sees such a request, it will re-broadcast it onto the network. As a result, the Control Solver Workload partner will now see the ARP request from the I/O HIVE node (on behalf of its partner), and respond to the I/O HIVE node. The I/O HIVE node will then forward the response back to the Control Solver Workload that initiated the proxy ARP request.

The Control Solver Workload control state is replicated from primary to backup over the same redundant physical (FTE) network. The Control Solver Workloads reads and writes values to and from field I/O via the I/O HIVE (CN100, EIM). It is possible for the Control Solver Workloads to become physically segregated from one another but continue to have connectivity to their field I/O. This creates a condition where the backup Control Solver Workload will assume the primary role even though its partner is actively controlling field I/O as a primary. This results in a dual-primary condition where two separate Control Solver Workloads assume the same presence (IP Address) on the redundant network. This will disrupt communication between the original Control Solver Workload and its field I/O (CN100 or EIM), resulting in a loss of control.

Embodiments as described herein include mechanisms of using the ARP (Address Resolution Protocol) request employed by a backup Control Solver Workload to confirm the presence of Primary Control Solver Workload. Control Solver Workloads will effectively proxy their ARP requests for their partners through common I/O HIVE nodes (CN100, EIM). Special user-space applications will be written to construct the requests and broadcast them onto the network, on which the I/O HIVE nodes will be listening. If an I/O HIVE node sees such a request, it will re-broadcast it onto the network. The Control Solver Workload partner will now see the ARP request from the I/O HIVE node (on behalf of its partner) and respond to the I/O HIVE node. The I/O HIVE node will then forward the response back to the Control Solver Workload that initiated the proxy ARP request.

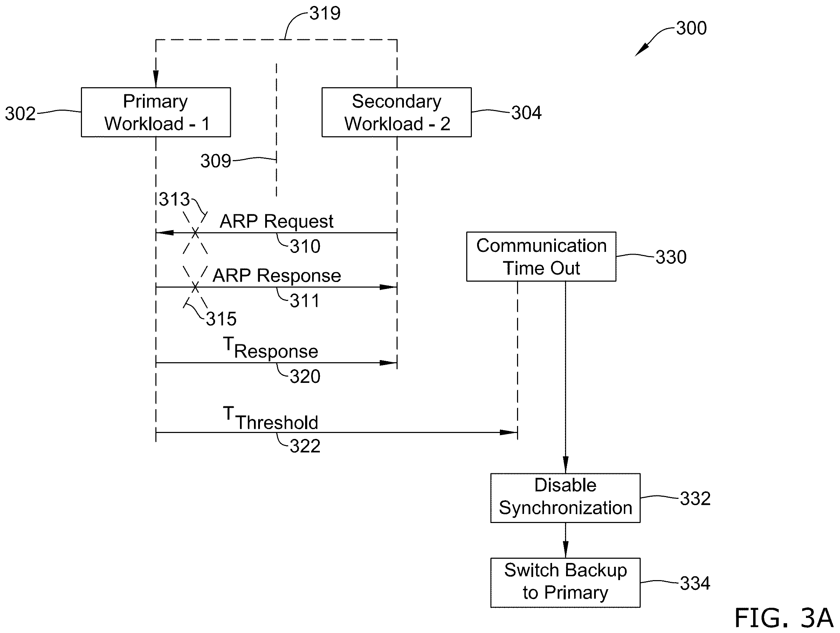

FIG. 3A illustrates a timing diagram 300 of communications between Control Solver Workloads, in accordance with various embodiments. In various embodiments, Control Solver Workload (Primary Workload-1) 302 and Control Solver Workload (Secondary Workload-2) 304 represent a process control algorithm that is programmed to be performed on a primary controller (e.g., controller 120 operating as primary controller H1P 150 - FIG. 1), and backed up on a secondary controller (e.g., controller 123 operating as secondary controller H1S 151 - FIG. 1). In various embodiments, workload-1 302 and workload-2 304 may be located in two different controller platforms, such as controller platform 140 and controller platform 141, respectively, as illustrated for system 100 (FIG. 1).

In its role as a backup workload, workload-2 304 is configured to issue, in various embodiments at some predetermined time interval, an ARP request message 310 directed the controller where workload-1 302 is operating. Upon issuing the ARP request message 310, workload-2 304 may also initiate a response timer having a response timer threshold value, the response timer threshold value representing the time span illustratively represented by arrow T-threshold at arrow 322. The ARP request message 310 may be communicated over a communications link, illustratively represented by dashed line 319, which may comprise one or more networks including one or more network switches and one or more upper level controllers.

Under normal conditions, and when workload-1 302 is functioning properly, workload-1 302 is configured to, upon receiving ARP request 310, respond to workload-2 304 with an ARP response 311, indicating that workload-1 302 is in fact online and is performing the processing required for the operation of workload-1. When the ARP response 311 is received back at workload-2 304 within a response time limit, illustratively represented as T-response and arrow 320 in diagram 300, that is less than the time period allowed for T-threshold (arrow 322), workload-2 304 is configured to understand that workload-1 302 is functioning properly, and that no action with regards to taking over the role as the primary for workload-1 is required.

In the alternative, after issuing the ARP Request 310 and initiating the response timer, when workload-2 304 does not receive ARP response 311 within the time period T-threshold (arrow 322), workload-2 304 may be configured to assume that workload-1 302 is off-line and/or has failed. Under these circumstances, workload-2 304 can be configured to process a communication timeout routine 330 that includes workoad-2 304 disabling synchronization of operational states between workload-1 302 and workload-2 304, as represented by block 332 in diagram 300, and switching over to acting as the primary processor, as represented by bock 334 in diagram 300, to perform the processing previously being provided using workload-1 302. As part of the switchover at block 334, workload-2 304 will assure the IP address of the primary for the newly assumed workload processing.

In some instances, the switch over at block 334 may in fact be a result of the failure, for some reason, of workload-1 302, or because workload-1 302 is off-line for some reasons, wherein the switchover by workload-2 304 provides the desired function of backup and redundancy for the failed operating status of workload-1 302. However, in other instances, the failure to receive any ARP response at workload-2 304 may be the result of a failure in the communication network 319 providing the communicative coupling between workload-1 302 and workload-2 304, and not due to any direct failure of workload-1 302, wherein workload-1 302 continues to be properly performed by the original controller acting as the primary for performing workload-1 302, and utilizing the IP address for the primary controller performing workload-1 302. The failure of the communications between workload-1 302 and workload-2 304 may be illustratively represented by "X" 313, showing a failure of ARP request 310 issued by workload-2 304 from being received at workload-1 302, or as illustratively represented by "X" 315 showing a failure of the ARP response message 311 issued by workload-1 302 from being received at workload-2 304.

In instances wherein the failure of the communications between workload-1 302 and workload-2 304 is due to a failure in the communication link 319, and not due to any failure or off-line status of workload-1 302, the secondary controller performing workload-2 304 may assume the role as primary controller, and take on the IP address of the primary controller, so that now both workload-1 302 and workload-2 304 are operating using the same IP address. The results can be a loss of control of the I/O HIVE and/or at least the potion of the control system being controlled by the process controls previously being performed by workload-1 302 using workload-2 304 only as a backup.

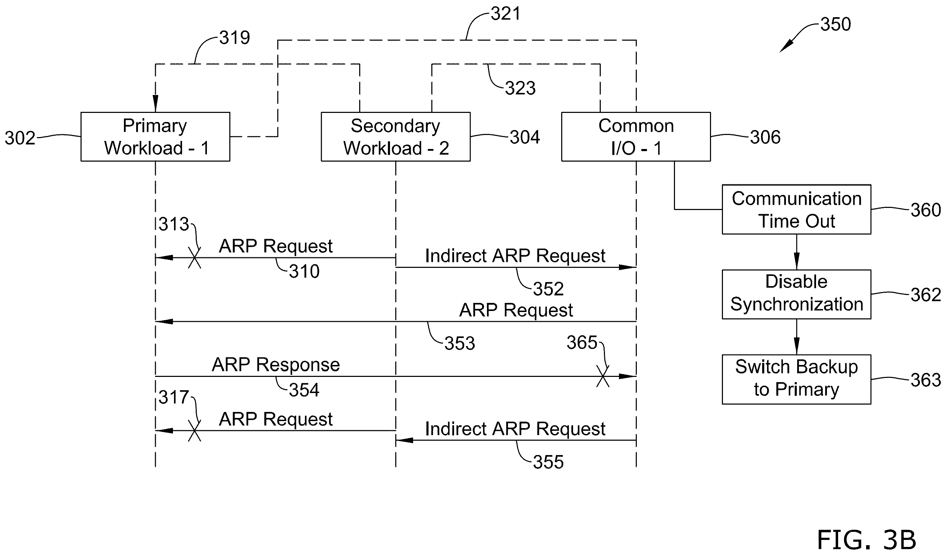

FIG. 3B illustrates a diagram 350 of a modified configuration of the workload processing as described above with respect to FIG. 3A, in accordance with various embodiments. As shown in FIG. 3B, diagram 350 includes workload-1 302 communicatively coupled to workload-2 304 via combinations link 319, in the same or similar manner as illustrated in FIG. 3A. However, diagram 350 includes the addition of common I/O-1 306, which is communicatively coupled to workload-1 302 through communications link 321, and wherein I/O-1 306 is also coupled separately to workload-2 304 through communications link 323. Further, communications links 321 and 322 are provided as communication links that are separate from and do not depend on communications link 319. Various scenarios for communications that can be configured to occur between workload-1 302, workload-2 304, and common I/O-1 306 are further described below to illustrate how the modified configuration as shown in diagram 350 is configured to avoid the improper occurrence of "dual primary" controls for a workload.

As shown in diagram 350, workload-2 304 issues ARP request 310 directed to workload-1 302, requesting a status confirmation from workload-1 302, and which may be sent over communications link 319. Workload-2 304 may be issuing this and other ARP requests, such as ARP request 311, at some predefined and iterative time interval because workload-2 304 is configured as the backup or secondary workload for workload-1 302, and as such needs to confirm the operational status of workload-1 302. At a same time, or just following the time of issuance of the ARP Request 310, workload-2 304 also issues an indirect ARP request 352, which is directed to I/O-1 306, and which may be communicated over the separate communication link 323 to I/O-1 306, which is not dependent on commutations link 319.

At various times or for some reason, the communications intended to be provided over communications link 319 fail, and as a result the ARP request 310, which was issued by workload-2 304 and directed to workload-1 302 over communication link 319, fails to be received at workload-1 302, as illustratively represented by "X" 313. However, the communication of the indirect ARP request 352 from workload-2 304 to I/O-1 306 is successfully received at I/O-1 306 using communication link 323, which is completely separate from and not affected by the failure of communication link 319. In response to receiving the indirect ARP request 352 at I/O-1 306, and because I/O-1 306 is communicatively coupled separately to workload-1 302 thorough communication link 321, I/O-1 306 is able to forward the indirect ARP request 352 to workload-1 302 using communication link 321, as illustratively represented by ARP request 353. In reply to receiving the ARP request 353 from I/O-1 306, and despite the failure of ARP request 310 being received at workload-1 302, workload-1 302 responds to ARP request 353 received from I/O-1 306 with ARP response 354, wherein workload-1 302 is configured to include in the ARP response 354 an message indicative of the operational state or status of the workload-1 302.

I/O-1 306 is configured to receive the ARP response 354, and assuming the information included in the ARP response 354 includes an indication that workload-1 302 is on-line and functioning properly, I/O-1 306 is configured to generate and output indirect ARP response 355 directed to workload-2 304, which instructs workload-2 304 that workload-1 302 is online and is functioning properly, and that no action with regards to assuming the role of primary controller for workload-1 302 on the part of workload-2 304 is required at the present time. In this scenario, the intervention of control provided by I/O-1 306 prevents workload-2 304 from improperly proceeding with a switchover to act as the primary controller for the process(es) being properly performed by workload-1 302, which would, if done create the "dual primary" issues that are avoided using I/O-1 306 interactively communicating with both workload-1 302 and workload-2 304 as describe above.

In an alternative scenario, when the ARP response 354 from workload-1 302 is received back at I/O-1 306, the information included in the ARP response 354 indicates that the workload-1 302 is offline and/or is not operating properly. In this scenario, I/O-1 306 can be configured to generate and output indirect ARP response 355 directed to workload-2 304, which instructs workload-2 304 that workload-1 302 is offline and/or is not functioning properly. Based on this information as issued by I/O-1 306 and as received at workload-2 304 in the indirect ARP response 355, workload-2 304 can be configured to perform a switchover, and take over as the primary controller for performing the control process(es) that were previously being provided by workload-1 302.

In another alternative scenario, at the same time or just after issuing the ARP request 353 directed to workload-1 302, I/O-1 306 may initiate a response timer having a response timer threshold value, wherein the response timer threshold value represents a time limit set by I/O-1 306 for receiving a response back from workload-1 302 in reply to ARP request 353. If the I/O-1 306 does not receive an ARP response 354 back from the workload-1 302 before the timer reaches the response timer threshold value, as illustratively represented in diagram 350 a commutations timeout 360, I/O-1 306 can be configured to assume that workload-1 302 is off-line and/or has failed. Under these circumstances, I/O-1 306 can be configured to generate and output to workload-2 304, for example as indirect ARP response 355, including instructions for workoad-2 304 to perform a disabling synchronization of operational states between workload-1 302 and orwkoad-2 304, as represented by block 362 in diagram 350, and perform a switchover to now act as the primary processor, as represented by bock 364 in diagram 350, to perform the processing previously being provided using workload-1 302. As part of the switchover at block 363, workload-2 304 will assume the IP address of the primary for the newly assumed workload processing.

However, in scenarios where I/O-1 306 does not receive the ARP response 354 back before the expiration of the response timer imitated as the issuance of ARP request 353, I/O-1 306 may not initiate workload-2 304 to perform the switchover in cases where workload-2 304 has instead received a response from workload-1 302 indicating that workload-1 is online and functioning properly.

Other communication scenarios related to diagram 350 and messages and timing for messages sent and received between workload-1 302, workload-2, 304, and I/O-1 306 are possible. For example, although messages and responses are referred to as being formatted using the Address Resolution Protocol, messages and responses are not limited to a particular protocol, and may comprise formats and protocols other than being provided using Address Resolution Protocol. Regardless, the addition of the message monitoring, rebroadcasting, and indirect messaging as provided by I/O-1 306 can prevent, in many instances, the occurrence of a "dual primary" situation, or a situations where two different workload controllers are operating on the same workload within a process control system.

Thus, in summary embodiments of control system using an I/O subsystem as an intermediate for communications between workload are configured to confirm the presence of a primary control application by a backup control application via a common I/O subsystem in an automation control platform to prevent dual primary conditions. The I/O subsystem receives ARP requests generated by the backup control application and broadcast them onto the network. Further, the primary control application receives the requests and provides the response back to the backup control application via I/O subsystem.

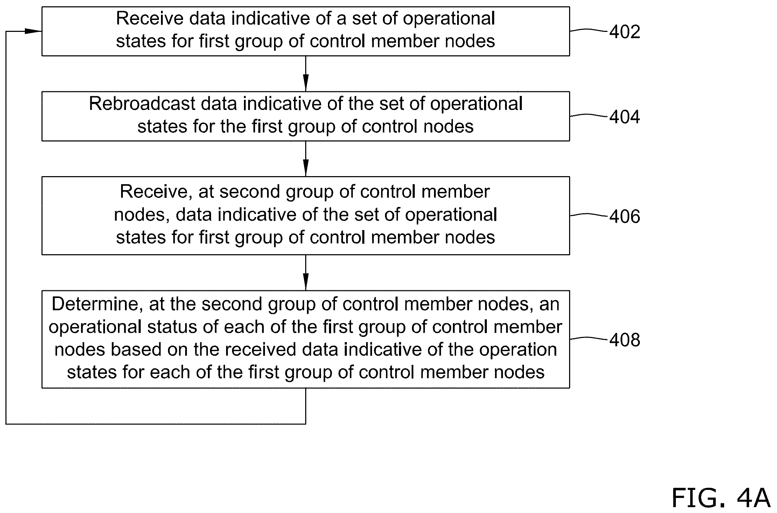

FIG. 4A illustrates a flow chart of a method 400 for operation of a process control system, in accordance with various embodiments. In some embodiments, the operations described with respect to method 400 may be performed, in whole or in part, by computer circuity, such as a processor or a set of processors, which may be included in computer/user interface 101, supervisory controller 102, and/or other devices, such as any of the controllers illustrated and describe with respect to system 100 and FIG. 1, including I/O controllers 130 and 132, as illustrated and described above with respect to system 100 and FIG. 1, or another computer system, such as computer system 502 (FIG. 5).

Embodiments of method 400 include receiving, at an input/output member node of the process control system, data indicative of a set of operational states for a first group of control member nodes, (block 402).

Embodiments of method 400 include rebroadcasting, from the input/output control member node and over a communication link coupling the input/output member node to a second group of control member nodes, the data indicative of the set of operational states for the first group of control nodes, (block 404).

Embodiments of method 400 include receiving, at the second group of control member nodes, the data indicative of the set of operational states for the first group of control member nodes, (block 406). Embodiments of method 400 include determining, at the second group of control member nodes, an operational status of each of the first group of control member nodes based on the received data indicative of the operation states for each of the first group of control member nodes, (block 408).

In various embodiments of method 400, the second set of one or more controllers are located in a second controller platform that is different from the first controller platform. In varies embodiments, one or more of the controllers in the second set of controllers is configured as a secondary and backup controller for one of more of the controllers in the first set of controllers. In various embodiments, the second set of one or more controllers comprise a second set of one or more workloads operable to be processed using one or more of the controllers included in the second set of controllers. In various embodiments, the second set of one or more workloads is configured as a secondary backup for one or more of the workloads on the first set of workloads.

Embodiments of method 400 include determining one or more actions to be taken by the I/O controller made in response to the detection the detection of the failure of the one or more data communications between the first set of one or more controllers and the second set of one or more controllers. In various embodiments, the one or more actions includes sending a message to a secondary controller acting a backup controller to assure the role of the primary controller in place of a controller determine dot be offline or in a failed condition. In various embodiments, the one or more actions includes sending a message to a secondary controller acting a backup controller that the associated primary controller is online and functioning properly, and not to assure the role of the primary controller for processing the control application or workload current being performed by the primary controller.

Embodiments of method 400 include wherein the second group of control member nodes is partitioned from the first group of control member nodes so that any broadcasts made by the first group of control member nodes are not directly communicated to the second group of control member nodes. Embodiments of method 400 include wherein at least one of the second group of control member nodes is operating as a backup processing node for at least one workload being processed by one or more controllers included in the first group of control member nodes. Embodiments of method 400 include wherein rebroadcasting the data indicative of the set of operational states for the first group of control nodes includes providing the rebroadcasting in a time period that is less than the timeout threshold period of time allowed before a nonresponsive control member node is considered to be inactive.

Embodiments of method 400 include wherein the first group of control member nodes is coupled to a first set of one or more network switches, and the second group of control member nodes is coupled to a second set of one or more network switches that are different and separate from the one or more network switches of the first group of switches. Embodiments of method 400 include wherein the first set of one or more switches is communicatively coupled to the input/output member node thru a first commination link, and the second set of one or more network switches is communicatively coupled to the input/output member node through a second communication link that is different and separate from the first communication link. Embodiments of method 400 include interfacing with a plurality of sensors and controlling the operation of a plurality of actuators using the input/output control member node while the plurality of sensors and the plurality of actuators are controlling the operation of one or more pieces of processing equipment included in the process control system.

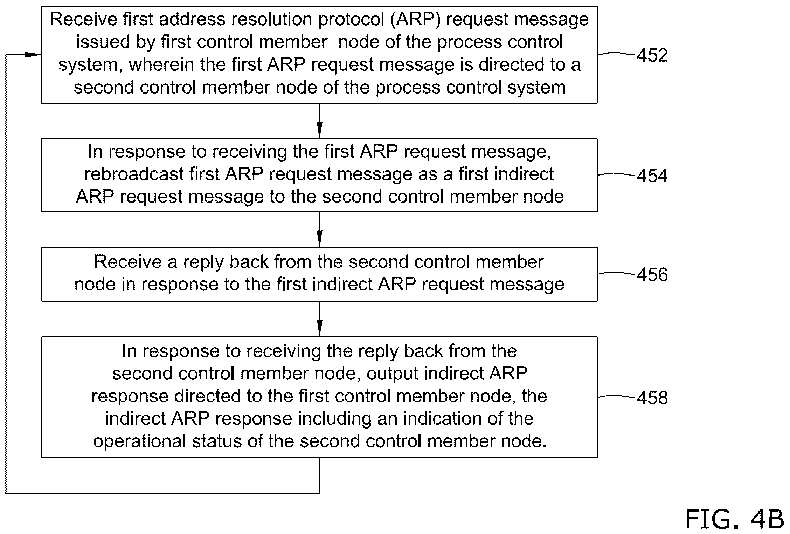

FIG. 4B illustrates a flow chart of a method 450 for operation of a process control system, in accordance with various embodiments. In some embodiments, the operations described with respect to method 450 may be performed, in whole or in part, by computer circuity, such as a processor or a set of processors, which may be included in computer/user interface 101, supervisory controller 102, and/or other devices, such as any of the controllers illustrated and describe with respect to system 100 and FIG. 1, including I/O controllers 130 and 132, as illustrated and described above with respect to system 100 and FIG. 1, or another computer system, such as computer system 502 (FIG. 5).

Embodiments of method 400 include receiving, at an input/output member node of the process control system, a first address resolution protocol (ARP) request message issued by a first control member node of the process control system, wherein the first ARP request message is directed to a second control member node of the process control system and includes a request for information regarding an operational status of the second control member node, (block 452).

Embodiments of method 450 include in response to receiving the first ARP request message, rebroadcasting, from the input/output member node, the first ARP request message as a first indirect ARP request message to the second control member node, (block 454).

Embodiments of method 450 include receiving, at the input/output member node, a reply back from the second control member node in response to the first indirect ARP request message (block 456). Embodiments of method 450 include in response to receiving the reply back from the second control member node, outputting, from the input/output member node, an indirect ARP response directed to the first control member node, the indirect ARP response including an indication of the operational status of the second control member node, (block 458).

Embodiments of method 450 include, wherein the second control member node is operating as a secondary and backup control processor for the first control member node. Embodiments of method 450 include, wherein the reply back from the second control member node includes an indication that the operational status of the second control member node indicates that the second control member node is online and functioning properly. Embodiments of method 450 include wherein the reply back from the second control member node includes an indication that an operational status of the second control member node is offline or failed, and wherein the indirect ARP response directed to the first control member node includes an indication that the second control member node is offline or failed.

Embodiments of method 450 include the method further including: in response to receiving, at the first control member node, the indication that the second control member node is offline or has failed, performing a switchover including the first control member node assuming the role of a primary controller and beginning execution of a workload prevoiusly being processed by the second control member node when the second control member node was operating as the an original primary controller. Embodiments of method 450 include initiating a response timer having a response timer threshold value at a same time as the rebroadcasting the first indirect ARP request message to the second control member node, wherein the response timer threshold value represents a time limit set by input/output member node for receiving a response back from the second control member node. Embodiments of method 450 include using the input/output control member node, interfacing with a plurality of sensors and controlling the operation of a plurality of actuators using the input/output control member node while the plurality of sensors and the plurality of actuators are controlling the operation of one or more pieces of processing equipment included in the process control system.

Although in embodiments of method 400 the messages and responses are referred to as being formatted using the Address Resolution Protocol, messages and responses included in method 400, and any variations and/or equivalents thereof, are not limited to using a particular protocol, and may comprise formats and protocols other than being provided using the Address Resolution Protocol.

FIG. 5 illustrates a block diagram 500 depicting an example computer system 502, in accordance with various embodiments. Computer system 502 may be configured to provide any of the features and to perform any of the functions described in this disclosure related to communications within a process control system utilizing the I/O controller(s) to prevent improper implementation of "dual primary" controllers, and to address other types of communicative losses within the process control system, as described above. In some embodiments, computer system 502 is included or incorporated into computer/user interface 101 (FIG. 1), and is configured to perform any of the functions and provide any of the features ascribed and/or attributable to computer/user interface 101. In various embodiments, computer system 502 may be included in or incorporated into any of the one or more devices included in a process control system, such as the controllers, including the I/O controller(s) and supervisory controller(s), and other network devices, such as network switches, that may be included in a process control system, such as system 100 (FIG. 1).

Referring back to FIG. 5, computer system 502 includes processing device 510, possibly including multiple processors, multiple cores, multiple nodes, and/or implementing multi-threading, etc., communicatively coupled to one or more storage devices 515 by a bus system 505. Example types of processing devices 510 include microprocessors, microcontrollers, digital signal processors, field programmable gate arrays, application specific integrated circuits, and discreet circuitry.

As shown in FIG. 5, storage devices 515 includes memory 530 and persistent storage 535. Memory 530 and persistent storage 535 are examples of storage devices that represent any structure(s) capable of storing and facilitating retrieval of information, such as data, program code, and/or other suitable information on a temporary or permanent basis. Memory 530 may represent a random access memory or any other suitable volatile or non-volatile storage device(s). Persistent storage 535 may contain one or more components or devices supporting longer-term storage of data, such as a ready only memory, hard drive, flash memory, or optical disc.

Storage devices 515 include additional data and software modules that may be executed by processing device 510 to provide any of the features and to perform any of the functions ascribed to the control and messaging of controller and workload communications, as described above. As shown in FIG. 5, storage device 515 includes a controller primary/secondary mapping 532 that allow computer system 502 to know the relationships between the primary and secondary controllers and workloads, as needed for processing of various aspects of the operation of a process control system, such as system 100 (FIG. 1).

Processing device 510 may be configured to execute any instructions stored in and/or provided by memory 530, persistent storage 535, and controller primary/secondary mapping 532, in order to perform any of the functions and to provide any of the features of the various embodiments of process control systems as described herein.

As shown in FIG. 5, computer system also includes communications unit 520 and I/O unit 525, which are communicatively coupled to bus system 505, and therefore to one another and to processing device 510 and storage devices 515. The computer system 502 can communicate via transmissions to and/or from remote devices via the network interface 520 in accordance with a network protocol corresponding to the type of network interface, whether wired or wireless and depending upon the carrying medium. In addition, a communication or transmission can involve other layers of a communication protocol and or communication protocol suites (e.g., transmission control protocol, Internet Protocol, user datagram protocol, virtual private network protocols, etc.). In addition, communications unit 520 may be configured to communicate messages to other devices in a process control system, such as but not limited to controllers, including I/O controller(s), and messages related to workloads being performed by the process control system.

I/O unit 525 may be configured to operate as an interface for providing communicative coupling between computer system 502 and one or more user input devices 526, as well as one or more output devices 528. User input devices 526 may include one or more devices such as a computer mouse, computer keyboard, voice recognition hardware and software, and/or other devices such as a touch screen, that allow a user to provide inputs to computer system 502. Output devices 528 may include one or more devices, such as a computer monitor and/ speaker(s), which are configured to provide output information, such as visual graphical displays and/or sounds, perceivable by a user such as a process control engineer or a technician. Output devices 528 may include other types of output devices, such as a printer. In various embodiments, the input devices 526 may be used to input information, such as controller configurations, and other parameters related to the operation of the process control system, such as system 100 (FIG. 1), for example as illustrated and described with respect to FIGS. 2A-2C, 3A-3B, and 4 above, which are related to the communications and workloads used to control the operation of the process control system where computer system 502 may be incorporated. In various embodiments, graphical information and depictions related to the status and operation of the process control system where computer system 502 is incorporated may be generated and displayed for example on a monitor or display provided as part of output devices 528 for use by a user, such as a process control engineer or technician.

Any one of the previously described functionalities may be partially (or entirely) implemented in hardware and/or on the processing device 510. For example, the functionality may be implemented with an application specific integrated circuit, in logic implemented in the processing device 510, in a co-processor on a peripheral device or card, etc. Further, realizations may include fewer or additional components not illustrated in FIG. 5 (e.g., video cards, audio cards, additional network interfaces, peripheral devices, etc.). Although illustrated as being coupled to the bus 505, one or more of the memory and storage devices including in storage devices 515 may be coupled directly to the processing device 510.

Although FIG. 5 illustrates one example of a computer system 502 supporting industrial process control and automation systems, variations in the configuration of computer system 502 are possible. For example, various components in computer system 502 could be combined, further subdivided, or omitted and additional components could be added according to particular needs. Also, processing device 510 can come in a wide variety of configurations, and the configuration of computer system 502 as illustrated in FIG. 5 does not limit this disclosure to any particular configuration of computing devices.

The following numbered examples are illustrative.
Example 1 is a method for executing process control operations in a process control system, the method comprising: receiving, at an input/output member node of the process control system, data indicative of a set of operational states for a first group of control member nodes, rebroadcasting, from the input/output control member node and over a communication link coupling the input/output member node to a second group of control member nodes, the data indicative of the set of operational states for the first group of control nodes; receiving, at the second group of control member nodes, the data indicative of the set of operational states for the first group of control member nodes; and determining, at the second group of control member nodes, an operational status of each of the first group of control member nodes based on the received data indicative of the operation states for each of the first group of control member nodes.
Example 2 is a method as in Example 1, wherein the second group of control member nodes is partitioned from the first group of control member nodes so that any broadcasts made by the first group of control member nodes are not directly communicated to the second group of control member nodes.
Example 3 is a method as in any of Examples 1-2, wherein at least one of the second group of control member nodes is operating as a backup processing node for at least one workload being processed by one or more controllers included in the first group of control member nodes.
Example 4 is a method as in any of Examples 1-3, wherein rebroadcasting the data indicative of the set of operational states for the first group of control nodes includes providing the rebroadcasting in a time period that is less than the timeout threshold period of time allowed before a nonresponsive control member node is considered to be inactive.
Example 5 is a method as in any of Examples 1-4, wherein the first group of control member nodes is coupled to a first set of one or more network switches, and the second group of control member nodes is coupled to a second set of one or more network switches that are different and separate from the one or more network switches of the first group of switches.
Example 6 is a method as in any of Examples 1-5, wherein the first set of one or more switches is communicatively coupled to the input/output member node thru a first commination link, and the second set of one or more network switches is communicatively coupled to the input/output member node through a second communication link that is different and separate from the first communication link.
Example 7 is a method as in any of Examples 1-6, further comprising: interfacing with a plurality of sensors and controlling the operation of a plurality of actuators using the input/output control member node while the plurality of sensors and the plurality of actuators are controlling the operation of one or more pieces of processing equipment included in the process control system.
Example 8 is a method for executing process control operations in a process control system, the method comprising: receiving, at an input/output member node of the process control system, a first address request message issued by a first control member node of the process control system, wherein the first address request message is directed to a second control member node of the process control system and includes a request for information regarding an operational status of the second control member node; in response to receiving the first address request message, rebroadcasting, from the input/output member node, the first address request message as a first indirect address request message to the second control member node; receiving, at the input/output member node, a reply back from the second control member node in response to the first indirect address request message; and in response to receiving the reply back from the second control member node, outputting, from the input/output member node, an indirect address response directed to the first control member node, the indirect address response including an indication of the operational status of the second control member node.
Example 9 is a method as in Example 8, wherein the second control member node is operating as a secondary and backup control processor for the first control member node.
Example 10 is a method as in any of Examples 8-9, wherein the reply back from the second control member node includes an indication that the operational status of the second control member node indicates that the second control member node is online and functioning properly.
Example 11 is a method as in any of Examples 8-10, wherein the reply back from the second control member node includes an indication that an operational status of the second control member node is offline or failed, and wherein the indirect address response directed to the first control member node includes an indication that the second control member node is offline or failed.
Example 12 is a method as in any of Examples 8-11, further including: in response to receiving, at the first control member node, the indication that the second control member node is offline or has failed, performing a switchover including the first control member node assuming the role of a primary controller and beginning execution of a workload previously being processed by the second control member node when the second control member node was operating as the an original primary controller.
Example 13 is a method as in any of Examples 8-12, further comprising: initiating a response timer having a response timer threshold value at a same time as the rebroadcasting the first indirect address request message to the second control member node, wherein the response timer threshold value represents a time limit set by input/output member node for receiving a response back from the second control member node.
Example 14 is a method as in any of Examples 8-13, further comprising: using the input/output control member node, interfacing with a plurality of sensors and controlling the operation of a plurality of actuators using the input/output control member node while the plurality of sensors and the plurality of actuators are controlling the operation of one or more pieces of processing equipment included in the process control system.
Example 15 is a process control system comprising a plurality of process controllers communicatively coupled together through an input/output control member, the input/output control member comprising one or more input/output controllers configured to control operations associated with input sensors and output actuators included as part of the process control system; the input/output control member configured to receive messages broadcast from the plurality of process controller, each of the messages including data indicative of an operational state of a particular one of the plurality of process controller that issued the message, and to rebroadcast the received messages over one or more communication links configured to communicatively couple the input/output control member with the plurality of process controllers.
Example 16 is a process control system as in Example 15, wherein at least one of the messages configured to be broadcast from the plurality of process controllers and received at the input/output control member includes an address request message configured to be issued by a first one of the plurality of process controllers and directed to a second one of the plurality of process controllers, wherein the second one of the plurality of process controllers is configured as a secondary and backup process controller for the first one of the plurality of process controllers.
Example 17 is a process control system as in any of Examples 15-16, wherein in response to receiving the at least one message including the address request message, the input/output control member is further configured to: communicate the address request message directly to the second one of the plurality of process controllers using an indirect address request; receive an address response back from the second one of the plurality of process controllers in reply to indirect address request; and upon receipt of the address response back from the second one of the plurality of process controllers, communicate an indirect address response to the first one of the plurality of process controller indicative of information provided in the address response received from the second one of the plurality of process controllers.
Example 18 is a process control system as in any of Examples 15-17, wherein the address response sent back from the second one of the plurality of process controllers includes information indicative of the operational state of the second one of the plurality of process controllers.
Example 19 is a process control system as in any of Examples 15-18, wherein a first group of control member nodes of the plurality of controllers is coupled to a first set of one or more network switches, and a second group of control member nodes of the plurality of controllers is coupled to a second set of one or more network switches that are different and separate from the one or more network switches of the first group of switches, and wherein the first set of one or more switches is communicatively coupled to the input/output control member through a first commination link, and the second group of one or more network switches is communicatively coupled to the input/output control member through a second communication link that is different and separate from the first communication link.
Example 20 is a process control system as in any of Examples 15-19, the input/output member further configured to: interfacing with a plurality of sensors and controlling the operation of a plurality of actuators using the input/output control member node while the plurality of sensors and the plurality of actuators are controlling the operation of one or more pieces of processing equipment included in the process control system.

While the aspects of the disclosure are described with reference to various implementations and exploitations, it will be understood that these aspects are illustrative, and that the scope of the claims is not limited to them. In general, techniques for controlling and regulating the operation of a process control system as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the disclosure. In general, structures and functionality presented as separate components in the example configurations may be implemented as a combined structure or component. Similarly, structures and functionality presented as a single component may be implemented as separate components. These and other variations, modifications, additions, and improvements may fall within the scope of the disclosure.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. §112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. §112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method for executing process control operations in a process control system, the method comprising:
receiving, at an input/output member node of the process control system, data indicative of a set of operational states for a first group of control member nodes,
rebroadcasting, from the input/output control member node and over a communication link coupling the input/output member node to a second group of control member nodes, the data indicative of the set of operational states for the first group of control nodes;
receiving, at the second group of control member nodes, the data indicative of the set of operational states for the first group of control member nodes; and
determining, at the second group of control member nodes, an operational status of each of the first group of control member nodes based on the received data indicative of the operation states for each of the first group of control member nodes.

2. The method of claim 1, wherein the second group of control member nodes is partitioned from the first group of control member nodes so that any broadcasts made by the first group of control member nodes are not directly communicated to the second group of control member nodes.

3. The method of claim 2, wherein at least one of the second group of control member nodes is operating as a backup processing node for at least one workload being processed by one or more controllers included in the first group of control member nodes.

4. The method of any of claims 1-3, wherein rebroadcasting the data indicative of the set of operational states for the first group of control nodes includes providing the rebroadcasting in a time period that is less than the timeout threshold period of time allowed before a nonresponsive control member node is considered to be inactive.

5. The method of any of claims 1-3, wherein the first group of control member nodes is coupled to a first set of one or more network switches, and the second group of control member nodes is coupled to a second set of one or more network switches that are different and separate from the one or more network switches of the first group of switches.

6. The method of claim 5, wherein the first set of one or more switches is communicatively coupled to the input/output member node thru a first commination link, and the second set of one or more network switches is communicatively coupled to the input/output member node through a second communication link that is different and separate from the first communication link.

7. The method of any of claims 1-3, further comprising:
interfacing with a plurality of sensors and controlling the operation of a plurality of actuators using the input/output control member node while the plurality of sensors and the plurality of actuators are controlling the operation of one or more pieces of processing equipment included in the process control system.

8. A method for executing process control operations in a process control system, the method comprising:
receiving, at an input/output member node of the process control system, a first address request message issued by a first control member node of the process control system, wherein the first address request message is directed to a second control member node of the process control system and includes a request for information regarding an operational status of the second control member node;
in response to receiving the first address request message, rebroadcasting, from the input/output member node, the first address request message as a first indirect address request message to the second control member node;
receiving, at the input/output member node, a reply back from the second control member node in response to the first indirect address request message; and
in response to receiving the reply back from the second control member node, outputting, from the input/output member node, an indirect address response directed to the first control member node, the indirect address response including an indication of the operational status of the second control member node.

9. The method of claim 8, wherein the second control member node is operating as a secondary and backup control processor for the first control member node.

10. The method of either of claims 8 or 9, wherein the reply back from the second control member node includes an indication that the operational status of the second control member node indicates that the second control member node is online and functioning properly.

11. The method of either of claims 8 or 9,
wherein the reply back from the second control member node includes an indication that an operational status of the second control member node is offline or failed, and
wherein the indirect address response directed to the first control member node includes an indication that the second control member node is offline or failed.

12. The method of claim 11, the method further including, in response to receiving, at the first control member node, the indication that the second control member node is offline or has failed, performing a switchover including the first control member node assuming the role of a primary controller and beginning execution of a workload prevoiusly being processed by the second control member node when the second control member node was operating as the an original primary controller.

13. The method of either of claims 8 or 9, further comprising initiating a response timer having a response timer threshold value at a same time as the rebroadcasting the first indirect address request message to the second control member node, wherein the response timer threshold value represents a time limit set by input/output member node for receiving a response back from the second control member node.

14. The method of either of claims 8 or 9, further comprising using the input/output control member node, interfacing with a plurality of sensors and controlling the operation of a plurality of actuators using the input/output control member node while the plurality of sensors and the plurality of actuators are controlling the operation of one or more pieces of processing equipment included in the process control system.

15. A process control system comprising:
a plurality of process controllers communicatively coupled together through an input/output control member, the input/output control member comprising one or more input/output controllers configured to control operations associated with input sensors and output actuators included as part of the process control system;
the input/output control member configured to receive messages broadcast from the plurality of process controller, each of the messages including data indicative of an operational state of a particular one of the plurality of process controller that issued the message, and to rebroadcast the received messages over one or more communication links configured to communicatively couple the input/output control member with the plurality of process controllers.
